# EUROPEAN PATENT SPECIFICATION

(11) **EP 4 487 934 B1**
(45) Date of publication and mention of the grant of the patent: **11.02.2026**
(21) Application number: 23184296.4
(22) Date of filing: 07.07.2023
(51) Int. Cl.: B01D 46/04, B01D 46/88, B01D 46/90

(54) **A FILTRATION SYSTEM**
FILTRATIONSSYSTEM
SYSTÈME DE FILTRATION

(43) Date of publication of application: 08.01.2025
(73) Proprietor: Donaldson Company, Inc., Bloomington, MN 55431 (US)
(72) Inventor: Bedford, Nigel Joseph, Ferndown, BH22 0JN (GB); Peach, Aaron Stephen, Weymouth, DT40LY (GB); Buczak, David, Poole, BH12 4EQ (GB)
(74) Representative: Potter Clarkson

(56) References cited:
- DE-A1- 10 245 734
- DE-A1- 2 058 142
- DE-A1- 3 316 379
- GB-A- 272 360
- US-A1- 2020 331 018

## Description

### Field

The present disclosure relates to a filtration system and, in particular although not exclusively, to a filtration system for an additive manufacturing apparatus.

### Background

US 2020/0331018 (A1) discloses a spray booth especially adapted for painting operations having a dry filter module with features for allowing changing of the filters quickly and in a contained environment, which reduces exposure to non-authorized and non-properly-protected personnel.

DE 10245734 (A1) discloses a filter system with a plurality of cleanable filter elements for separating suspended matter from an intake air flow which flows through the individual filter element from its raw air inlet to the clean air outlet.

GB 272360 (A) discloses an air cleaner of the type in which filtering tubes are successively agitated to free them of the dust remaining therein and in which the entirety of filtering tubes is rotatable about an axis parallel to the axis of the tubes.

DE 2058142 (A1) discloses a bulk material separator with a filter device, which has a number of adjacent filter bags for filtering transport air between the separator chamber and the air outlet and is provided with a counter current flushing device for cleaning the filter bags.

DE 3316379 (A1) discloses a method for filtering dust-laden raw gases, in particular hot metallurgical waste gases, in which the raw gas is passed through dedusting filter chambers and clean gas is passed in counter current through filter chambers to be cleaned.

### Summary

According to a first aspect of the present disclosure, there is provided a filtration system comprising:
a hub comprising:
   a gas inlet port for receiving dirty gas;
   a gas outlet port for providing clean gas;
   an inert gas channel for communicating an inert gas;
a filter cartridge support to accommodate at least three filter cartridges at respective filter cartridge locations;
an actuator configured to move the filter cartridge support relative to the hub such that a filter cartridge located in each filter cartridge location cycles between the following positions:
   a cartridge purge position, at which an inlet port of the filter cartridge is in fluid connection with the inert gas channel of the hub;
   a filtering position, at which:
      the inlet port of the filter cartridge is in fluid connection with the gas inlet port of the hub; and
      an outlet port of the filter cartridge is in fluid connection with the gas outlet port of the hub; and
   a passivation position, at which the filter cartridge can be passivated and subsequently removed from the filter cartridge support.

The hub may further comprise:
at least one filter cartridge active inlet port and at least one filter cartridge outlet port, wherein each of the filter cartridge active inlet and active outlet ports is for communicating gas to and from a filter cartridge;
an inlet manifold, wherein the gas inlet port and each of the filter cartridge active inlet ports open into the inlet manifold; and
an outlet manifold, wherein the gas outlet port and each of the filter cartridge active outlet ports open into the outlet manifold;

The actuator may be configured to move the filter cartridge support relative to the hub such that a filter cartridge located in each filter cartridge location cycles between:
the cartridge purge position;
a first filtering position, at which the filter cartridge is fluidly connected to: at least one of the at least one filter cartridge active inlet ports of the hub; and at least one of the at least one filter cartridge active outlet ports of the hub;
a last filtering position, at which the filter cartridge is fluidly connected to: at least one of the at least one filter cartridge active inlet ports of the hub; and at least one of the at least one filter cartridge active outlet ports of the hub; and
a passivation position.

The hub may comprise a single filter cartridge active inlet port and a single filter cartridge outlet port, wherein the single filter cartridge active inlet port extends continuously between the first filtering position and the last filtering position, and wherein the single filter cartridge active outlet port extends continuously between the first filtering position and the last filtering position.

The inlet manifold and the outlet manifold may be configured such that the rate of gas flow through the filter cartridge when it is in the last filtering position is greater than the rate of gas flow through the filter cartridge when it is in the first filtering position.

The inlet manifold and the outlet manifold may be tapered such that they have a cross-sectional area in the vicinity of the first filtering position that is greater than the cross-sectional area in the vicinity of the last filtering position.

The gas inlet port may open into the inlet manifold at a position that is closer to the last filtering position than the first filtering position. The gas outlet port may open into the outlet manifold at a position that is closer to the last filtering position than the first filtering position.

The hub may comprise:
a plurality of pairs of filter cartridge active inlet and active outlet ports, wherein each pair of filter cartridge active inlet and active outlet ports is for communicating gas to and from a filter cartridge;
an inlet manifold, wherein the gas inlet port and each of the filter cartridge active inlet ports open into the inlet manifold; and
an outlet manifold, wherein the gas outlet port and each of the filter cartridge active outlet ports open into the outlet manifold.

The actuator may be configured to move the filter cartridge support relative to the hub such that a filter cartridge located in each filter cartridge location cycles between:
the cartridge purge position;
a first filtering position, at which the filter cartridge is fluidly connected to a first pair of the filter cartridge active inlet and active outlet ports of the hub;
a last filtering position, at which the filter cartridge is fluidly connected to a last pair of the filter cartridge active inlet and active outlet ports of the hub; and
a passivation position.

According to a further aspect of the present disclosure, there is provided a filtration system comprising:
a hub comprising:
   a gas inlet port for receiving dirty gas;
   a gas outlet port for providing clean gas;
   at least one filter cartridge active inlet port and at least one filter cartridge active outlet port, wherein each of the filter cartridge active inlet and outlet ports are for communicating a gas to and from a filter cartridge;
   an inlet manifold, wherein the gas inlet port and each of the filter cartridge active inlet ports open into the inlet manifold;
   an outlet manifold, wherein the gas outlet port and each of the filter cartridge active outlet ports open into the outlet manifold;
a filter cartridge support to accommodate at least three filter cartridges at respective filter cartridge locations;
an actuator configured to move the filter cartridge support relative to the hub such that a filter cartridge located in each filter cartridge location cycles between:
   a first filtering position, at which the filter cartridge is fluidly connected to: at least one of the at least one filter cartridge active inlet ports; and at least one of the at least one filter cartridge outlet ports of the hub;
   a last filtering position, at which the filter cartridge is fluidly connected to: at least one of the at least one filter cartridge active inlet ports of the hub; and at least one of the at least one filter cartridge active outlet ports of the hub; and
   a passivation position, at which the filter cartridge can be passivated and subsequently removed from the filter cartridge support.

The hub may further comprise an inert gas channel for communicating an inert gas. The actuator may be configured to move the filter cartridge support relative to the hub such that a filter cartridge located in a filter cartridge location is located at a cartridge purge position before the first filtering position, wherein, when in the cartridge purge position, an inlet port of the filter cartridge is in fluid connection with the inert gas channel.

The hub may further comprise one or more intermediate pairs of filter cartridge active inlet and active outlet ports, wherein each pair of intermediate filter cartridge active inlet and active outlet ports is for communicating gas to and from a filter cartridge. Each of the one more intermediate filter cartridge active inlet ports may open into the inlet manifold. Each of the one more intermediate filter cartridge active outlet ports may open into the outlet manifold. The actuator may be configured to move the filter cartridge support relative to the hub such that, after the first filtering position and before the last filtering position, a filter cartridge located in each filter cartridge location is positioned at one or more intermediate filtering positions, at which the filter cartridge is fluidly connected to a pair of the intermediate filter cartridge active inlet and active outlet ports of the hub.

The inlet manifold and the outlet manifold may be configured such that the rate of gas flow through the last pair of filter cartridge active inlet and active outlet ports is greater than the rate of gas flow through the first pair of filter cartridge active inlet and active outlet ports.

The inlet manifold and the outlet manifold may be tapered such that they have a cross-sectional area in the vicinity of the first pair of filter cartridge active inlet and active outlet ports that is greater than the cross-sectional area in the vicinity of the last pair of filter cartridge active inlet and active outlet ports.

The gas inlet port may open into the inlet manifold at a position that is closer to the last filter cartridge active inlet port than the first filter cartridge active inlet port. The gas outlet port may open into the outlet manifold at a position that is closer to the last filter cartridge active outlet port than the first filter cartridge active outlet port.

The hub may further comprise a passivation inlet channel for communicating a passivation substance. The actuator may be configured to move the filter cartridge support relative to the hub such that when a filter cartridge is at the passivation position, an inlet port and / or an outlet port of the filter cartridge is in fluid connection with the passivation inlet channel of the hub.

The hub may further comprises a purge channel for communicating gas purged from a filter cartridge. When a filter cartridge is located at the purge position, an outlet port of the filter cartridge may be in fluid connection with the purge channel.

The actuator may be further configured to move the filter cartridge support relative to the hub to a cartridge-loading position that is before the first filtering position, wherein, when in the cartridge-receive position, a new filter cartridge is receivable at the filter cartridge support.

The filtration system may further comprise a cartridge locating mechanism for applying a bias force to the filter cartridge in order to bias the filter cartridge towards the filter cartridge support / hub.

The actuator may be configured to move the filter cartridge support relative to the hub such that a filter cartridge located in a filter cartridge location is located in a cartridge-unloading position after the passivation position, wherein, when in the cartridge-unloading position, the filter cartridge is removable from the filter cartridge support.

The hub may further comprise a cartridge removal mechanism for applying a bias force to the filter cartridge when it is in the cartridge-remove position in order to bias the filter cartridge away from the filter cartridge support / hub.

The filtration system may comprise:
a cartridge loading mechanism that automatically loads filter cartridges into the filter cartridge support; and / or
a cartridge unloading mechanism that automatically unloads filter cartridges from the filter cartridge support.

The actuator may be configured to move the filter cartridge support relative to the hub in order to advance the position of a filter cartridge located in each filter cartridge location periodically.

The actuator may be configured to advance the position of a filter cartridge located in each filter cartridge location in a stepwise fashion, such that it moves the filter cartridge support relative to the hub in discrete steps.

The filtration system may further comprise:
a sensor that is configured to sense the performance of the filtration system in order to provide sensed signalling; and
a controller that is configured process the sensed signalling in order to determine an effectiveness of the filtration system, and if it drops below a threshold value, then cause the actuator to advance the position of the filter cartridge support such that each filter cartridge that is located in a filter cartridge location is advanced to the next position.

The filtration system may further comprising a spike for piercing the filter cartridge when it is in the passivation position. The spike may have a conduit running through it such that it can communicate a passivation substance into the filter cartridge without it passing through the inlet and outlet ports of the filter cartridge.

There is also disclosed a method of operating a filtration system, the filtration system comprising:
a hub comprising:
   a gas inlet port for receiving dirty gas;
   a gas outlet port for providing clean gas;
   an inert gas channel for communicating an inert gas; and
a filter cartridge support to accommodate at least three filter cartridges at respective filter cartridge locations;
the method comprising:
moving the filter cartridge support relative to the hub such that a filter cartridge located in each filter cartridge location cycles between the following positions:
a cartridge purge position, at which an inlet port of the filter cartridge is in fluid connection with the inert gas channel of the hub;
a filtering position, at which:
   the inlet port of the filter cartridge is in fluid connection with the gas inlet port of the hub; and
   an outlet port of the filter cartridge is in fluid connection with the gas outlet port of the hub; and
a passivation position, at which the filter cartridge can be passivated and subsequently removed from the filter cartridge support.

There is also disclosed a method of operating a filtration system, the filtration system comprising:
a hub comprising:
   a gas inlet port for receiving dirty gas;
   a gas outlet port for providing clean gas;
   at least one filter cartridge active inlet port and at least one filter cartridge active outlet ports, wherein each of the filter cartridge active inlet and outlet ports are for communicating a gas to and from a filter cartridge;
   an inlet manifold, wherein the gas inlet port and each of the filter cartridge active inlet ports open into the inlet manifold; and
   an outlet manifold, wherein the gas outlet port and each of the filter cartridge active outlet ports open into the outlet manifold; and
a filter cartridge support to accommodate at least three filter cartridges at respective filter cartridge locations;
the method comprising:
moving the filter cartridge support relative to the hub such that a filter cartridge located in each filter cartridge location cycles between:
a first filtering position, at which the filter cartridge is fluidly connected to: at least one of the at least one filter cartridge active inlet ports of the hub; and at least one of the at least one filter cartridge outlet ports of the hub;
a last filtering position, at which the filter cartridge is fluidly connected to: at least one of the at least one filter cartridge active inlet ports of the hub; and at least one of the at least one filter cartridge active outlet ports of the hub; and
a passivation position, at which the filter cartridge can be passivated and subsequently removed from the filter cartridge support.

According to a further aspect of the present disclosure, there is provided a filtration system comprising:
a hub comprising:
   a gas inlet port for receiving dirty gas;
   a gas outlet port for providing clean gas;
   at least one filter cartridge active inlet port and at least one filter cartridge active outlet port, wherein each of the filter cartridge active inlet and outlet ports are for communicating a gas to and from a filter cartridge;
   an inlet manifold, wherein the gas inlet port and each of the filter cartridge active inlet ports open into the inlet manifold;
   an outlet manifold, wherein the gas outlet port and each of the filter cartridge active outlet ports open into the outlet manifold;
a filter cartridge support to accommodate at least two filter cartridges at respective filter cartridge locations;
an actuator configured to move the filter cartridge support relative to the hub such that a filter cartridge located in each filter cartridge location cycles between:
   a first filtering position, at which the filter cartridge is fluidly connected to: at least one of the at least one filter cartridge active inlet ports; and at least one of the at least one filter cartridge outlet ports of the hub; and
   a last filtering position, at which the filter cartridge is fluidly connected to: at least one of the at least one filter cartridge active inlet ports of the hub; and at least one of the at least one filter cartridge active outlet ports of the hub.

The actuator may be configured to move the filter cartridge support relative to the hub such that a filter cartridge located in each filter cartridge location also moves to any of the other positions disclosed herein.

The filter cartridge support may be rotatable relative to the hub such that a filter cartridge that is attached to the filter cartridge support cycles between the different positions.

### Brief Description of the Drawings

One or more embodiments will now be described by way of example only with reference to the accompanying drawings in which:
Figure 1 is a schematic view of a filtration system that is connected to an additive manufacturing (AM) apparatus;
Figures 2a and 2b illustrate schematically two examples of additive manufacturing processes that can be performed in the chamber of Figure 1;
Figure 3 shows an example embodiment of a filtration system according to the present disclosure;
Figure 4 shows a schematic view of a filter cartridge when it is disengaged from the filtration system;
Figure 5 shows a view of the filter cartridge support of Figure 3 from underneath when no filter cartridges are connected to it;
Figure 6a shows a perspective view of the hub of Figure 3,;
Figure 6b shows a view of the hub of Figure 3 from underneath;
Figure 7 shows another example of how a filter cartridge can be passivated when it is in the passivation position;
Figure 8 shows a process flow that illustrates a method of operating a filtration system;
Figure 9 shows a process flow that illustrates another method of operating a filtration system;
Figure 10 schematically illustrates another example of a filter cartridge that can be used with the filtration systems that are described herein; and
Figure 11 shows another example embodiment of a filtration system.

### Detailed Description

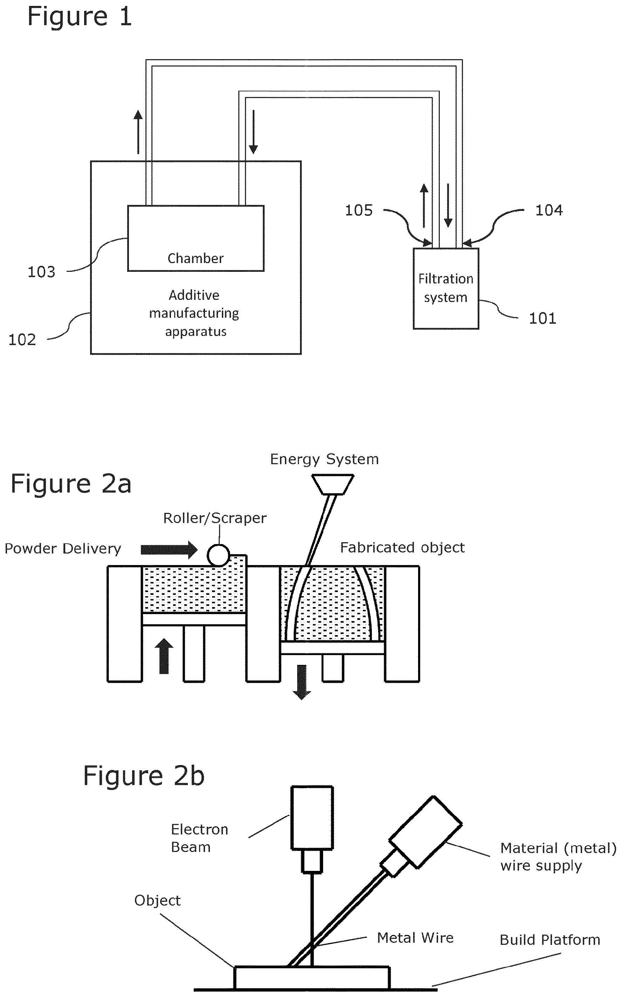

Figure 1 is a schematic view of a filtration system 101 that is connected to an additive manufacturing (AM) apparatus 102. The AM apparatus 102 includes a print chamber 103. The filtration system 101 includes a gas inlet port 104 for receiving dirty gas from the print chamber 103 of the AM apparatus 102. The filtration system 101 also includes a gas outlet port 105 for providing clean gas back to the print chamber 103 of the AM apparatus 102. In this example, as will be discussed in more detail below, the filtration system 101 includes replaceable filter cartridges (not shown).

As is known in the art, additive manufacturing involves the production of objects by adding material. Various sub-technologies such as Lazer Powder Bed Fusion, Binder Jetting and Directed Energy Deposition exist. Examples disclosed herein are particularly relevant to techniques that produce smoke and how that smoke can be safely filtered.

Figures 2a and 2b illustrate schematically two examples of additive manufacturing processes that can be performed in the chamber of Figure 1.

Figure 2a shows an example of powder bed fusion, in which thermal energy selectively fuses regions of a powder bed. Figure 2b shows an example of Directed Energy Deposition (DED), which includes a machine that has a nozzle mounted on a multi axis arm in order to deposit melted material onto a specified surface, where it solidifies.

Returning to Figure 1, continuous filtration can be required for additive manufacturing processes to ensure that a clean, inert environment is maintained in the chamber 103, with no breaks during the print process. Such breaks could result in flaws in the end product and / or could lead to an uncontrolled reaction of metal powder that is produced in the chamber 103 as part of the additive manufacturing process. In this example, argon (or another inert gas) is introduced into the chamber 103 during an AM process, such as a metal 3D printing process. Dirty argon is provided to the filtration system 101 from the chamber 103 such that it can be cleaned before being returned to the chamber 103. A risk of an undesirable thermal event exists when particles of material that that are present in the chamber 103 (including, but not limited, to titanium and aluminium) come into contact with air, which can result in rapid oxidation of the material leading to a potential exothermic event. Therefore, once a filter cartridge is ready to be replaced it should be passivated and thereby reacted in a controlled manner. This can be achieved by introducing an appropriate passivation material into the filter cartridge, in a controlled manner, in order to passivate and / or encapsulate the media held in the filter. Thereby, enabling the safe handling and disposal of the used filter cartridge. This will be discussed in more detail below.

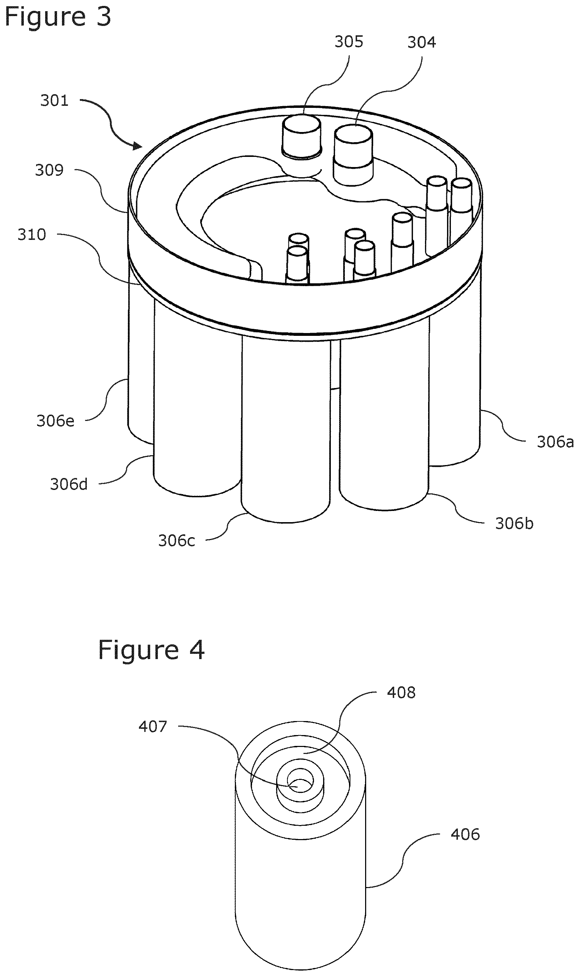

Figure 3 shows an example embodiment of a filtration system 301 according to the present disclosure. The filtration system 301 includes a plurality of replaceable filter cartridges 306a-306e, five of which are visible in Figure 3.

Figure 4 shows a schematic view of a filter cartridge 406 when it is disengaged from the filtration system. In this example, the filter cartridge 406 includes an output port 407 in the centre of an end face of the filter cartridge 406. The filter cartridge 406 also includes an annular inlet port 408 around the outlet port 407. Filter cartridges having this structure are well-known in the art, although it will be appreciated that the filtration systems disclosed herein are not limited to any specific types or structures of filter cartridges.

Returning to Figure 3, the filtration system 301 includes a hub 309 and a filter cartridge support 310.

The hub 309 includes: a gas inlet port 304 for receiving dirty gas from a manufacturing process, such as from a print chamber of an additive manufacturing apparatus; and a gas outlet port 305 for providing clean gas back to the manufacturing process. The hub 309 also includes various other ports that are for communicating gas to or from a filter cartridge 306a-e. Not all of these various other ports are very visible in Figure 3, but they will be described in more detail below.

The filter cartridge support 310 in this example is implemented as a plate that sits between the hub 309 and the filter cartridges 306a-e. In this example it is for accommodating eight filter cartridges 306a-e at respective filter cartridge locations. However, more generally in other examples, the filter cartridge support 310 can accommodate a different number of filter cartridges but preferably at least three filter cartridges at any one time. Each of the filter cartridge locations represents a fixed location in relation to the filter cartridge support 310, such that when a filter cartridge is located at a filter cartridge location it is held in that fixed location with respect to the filter cartridge support 310 until it is removed from the filtration system 301. The filter cartridge support 310 can include any suitable attachment mechanism for holding a filter cartridge at a filter cartridge location such as, but not limited to: a snap-fit mechanism, any form of displaceable mechanical detent, a screw thread, a cam or locating rail , a cam ring to push and hold the filter cartridge in position, a vacuum source to suck the filter cartridge into place, etc..

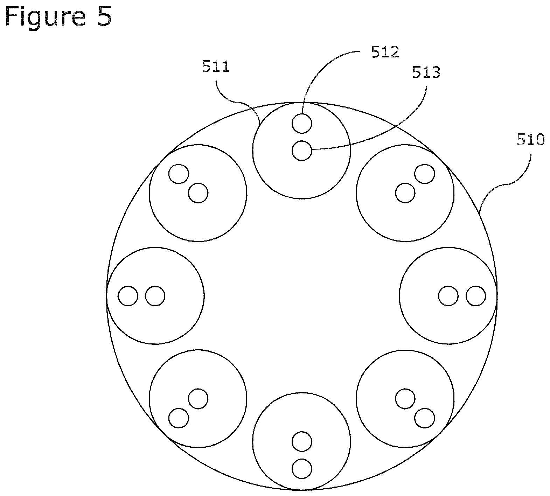

The filter cartridge support 310 in this example also has a number of gas flow channels through its thickness such that it can facilitate gas flow between the hub 309 and the filter cartridges 306a-e. These will be described in more detail with reference to Figure 5.

The filter cartridge support 310 is rotatable relative to the hub 309 such that the gas flow channels of the filter cartridge support 310 are aligned with different regions of the hub 309. Due to this relative rotation, the hub 309 can also be referred to as a carousel. In at least some of the relative orientations of the filter cartridge support 310 and the hub 309, gas flow channels through the filter cartridge support 310 are aligned with channels or ports in the hub 309. In some examples, the filter cartridge support 310 can be sealed with the hub 309 using a low friction tape / gasket material that extends across the interface between the two components thereby enabling ease of rotation between the static and dynamic rotating surfaces.

Figure 5 shows a view of the filter cartridge support 510 of Figure 3 from underneath when no filter cartridges are connected to it. The outline of eight filter cartridge locations 511 are shown in dashed lines. Each of these filter cartridge locations 511 is a portion of a lower surface of the filter cartridge support 510 to which an end surface of a filter cartridge can be attached when the filter cartridge is received at the filter cartridge location 511. The filter cartridge locations 511 are equiangularly circumferentially spaced around the filter cartridge support 510. In this example, they are spaced around the perimeter of the filter cartridge support 510.

Associated with each filter cartridge location 511 is a filter gas flow inlet channel 513 and a filter gas flow outlet channel 512, which of each pass through the thickness of the filter cartridge support 510. When a filter cartridge is positioned at a filter cartridge location 511, its inlet port is aligned with the filter gas flow inlet channel 513 and its outlet port is aligned with the filter gas flow outlet channel 512. In this way, a gas can be communicated to or from a filter cartridge when it is located at a filter cartridge location 511.

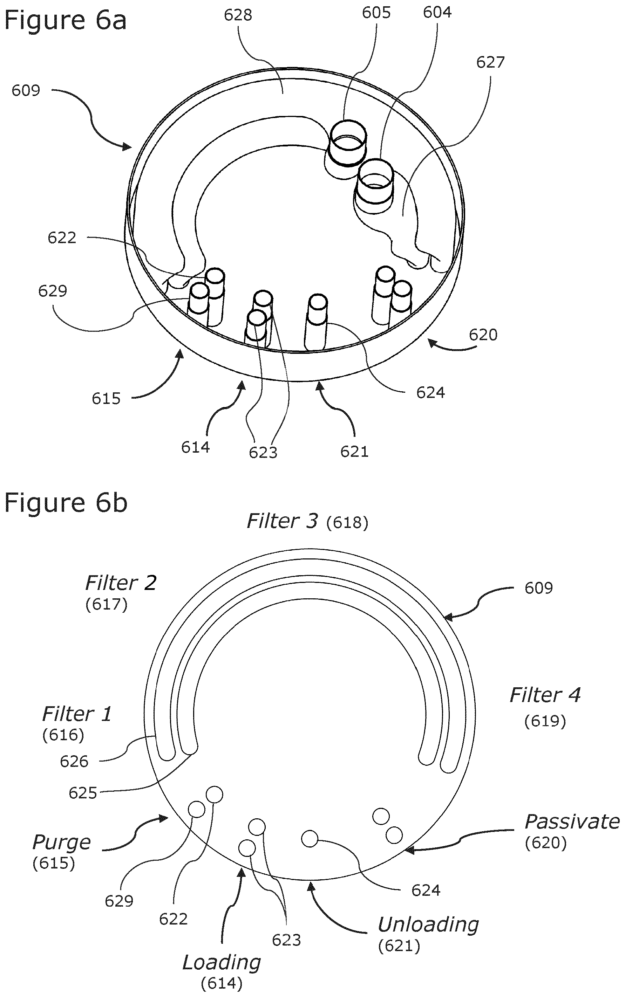

Figure 6a shows a perspective view of the hub 609 of Figure 3, and Figure 6b shows a view of the same hub 609 from underneath.

Figure 6a shows the gas inlet port 604 (that receives dirty gas) and the gas outlet port 605 (for providing clean gas).

In Figure 6b, eight different positions on the underside of the hub 609 are labelled. When a filter cartridge is positioned at each of these positions (via the filter cartridge support in this example) it can engage with the hub 609 in one of a number of different ways. As indicated above, the filter cartridge support is rotatable relative to the hub 609 such that a filter cartridge that is attached to the filter cartridge support can cycle between the different positions of the hub 609 that are shown in Figure 6b. In this example, an actuator is used to provide a force to the filter cartridge support to cause it to rotate such that a filter cartridge location on the filter cartridge support (as shown in Figure 5 with reference 511) moves between the different positions of the hub 609.

The positions that are shown in Figure 6b, some of which are also visible in Figures 6a, are:
- a cartridge-loading position 614, at which a new filter cartridge is receivable at the filter cartridge support. As will be discussed below, a previously used filter cartridge will have been removed from a filter cartridge location of the filter cartridge support before that filter cartridge location is moved on so that it aligns with the cartridge-loading position 614. Therefore, when the filter cartridge location first arrives at the cartridge-loading position 614 it is empty. That is, it does not have a filter cartridge attached to it. A new filter cartridge can then be received at the filter cartridge support when the associated filter cartridge location of the is at the cartridge-loading position 614 of the hub 609.
   In this example, two gas flow channels 623 through the hub 609 are shown at the cartridge-loading position 614. These gas flow channels 623 can be used to provide a pressure differential between the filter cartridge and the hub 609 / filter cartridge support such that a suction force is provided to the filter cartridge and it is urged into contact with the underside of the filter cartridge support. This is one example of a cartridge locating mechanism for applying a bias force to a filter cartridge in order to bias the filter cartridge towards the filter cartridge support / hub 609. Another example of a cartridge locating mechanism is a mechanical mechanisms, such as a cam mechanism, that applies an upward force to a lower surface of the filter cartridge. Such mechanisms may involve use of more or less than two gas flow channels 623 or no gas flow channels at all. Irrespective of what type of cartridge locating mechanism is used, it may apply the bias force when a filter cartridge is in the cartridge-loading position 614 and optionally also when the filter cartridge is any of the other positions that are described below (apart from the cartridge-unloading position 621).
   In some examples, a separate cartridge-loading position 614 may not be required because it can be possible to load a filter cartridge into the filtration system at a different position, such as the cartridge purge position 615 that is described below.
- a cartridge purge position 615, at which the filter cartridge is filled with an inert gas (such as argon), thereby purging air out of the filter cartridge. In this way, the filter cartridge can be pre-processed before it is used to filter dirty gas received from the manufacturing apparatus. When a filter cartridge is in the cartridge purge position 615, an inlet port of the filter cartridge is in fluid connection with an inert gas channel 622 in the hub 609. Also, an outlet port of the filter cartridge can be in fluid connection with a purge channel 629 in the hub 609. The purge channel 629 is for communicating gas purged out of the filter cartridge as the inert gas is provided into the filter cartridge. In some examples, the purge channel 629 can simply be an opening into the environment because it is safe to vent any purged gas to atmosphere.
   In some examples, a controllable valve may be associated with the inert gas channel 622 such the flow of the inert gas is controllable. This can be avoid wasting the inert gas because it does not need to continuously flow into the filter cartridge while it is in the cartridge purge position 615 and waiting to go online. For example, a controller may control the controllable valve such that it allows the inert gas to flow for a predetermined period of time before the filter cartridge moves on to the first filtering position 616, which is discussed below.
- first to fourth filtering positions 616-619, at which the filter cartridge is actively filtering the dirty gas that is received by the filtration system. At these positions, filter cartridges may be referred to as being online. The fourth filtering position 619 is the last filtering position in this example, and the second and third filtering positions are intermediate filtering positions.
   At least one filter cartridge active inlet port 625 and at least one filter cartridge active outlet port 626 in the hub 609 are associated with each of the first to fourth filtering positions 616-619. The filter cartridge active inlet port 625 is for communicating gas between the gas inlet port 604 of the hub 609 and the inlet ports of the filter cartridges that are in the first to fourth filtering positions 616-619. The filter cartridge active outlet port 626 is for communicating gas between the outlet ports of the filter cartridges that are in the first to fourth filtering positions 616-619 and the gas outlet port 605 of the hub 609. In this example, the filter cartridge active inlet port 625 is a single extended port that extends continuously such that it encompasses each of the first and the fourth filtering positions 616-619. Therefore, once a filter cartridge enters the first filtering position 616 it remains in constant fluid communication with the gas inlet port 604 and the gas outlet port 605 of the hub 609 until it leaves the last filtering position. That is, a filter cartridge active inlet port 625 and a filter cartridge active outlet port 626 in the hub 609 is associated with each filtering position such that a filter cartridge that is located at a filtering position 616-619 is fluidly connected to a pair of the filter cartridge active inlet and active outlet ports 625, 626 of the hub 609. In this way, dirty gas can enter into the filter cartridge through the filter cartridge active inlet port 625, and cleaned gas can exit the filter cartridge through the filter cartridge active outlet port 626.
   In an alternative implementation, a discrete pair of filter cartridge active inlet ports and filter cartridge active outlet ports can be associated with each of the first to fourth filtering positions 616-619. In which case, each pair of filter cartridge active inlet ports 625 and active outlet ports 626 are circumferentially spaced apart from each other around the hub 609. In the example of Figures 6a and 6b, the fourth pair of filter cartridge active inlet ports 625 and filter cartridge active outlet ports 626 would be the last pair, and the second and third pairs of filter cartridge active inlet ports 625 and filter cartridge active outlet ports 626 would be intermediate pairs.
   As can be seen from Figure 6a, the hub 609 in this example includes an inlet manifold 627 and an outlet manifold 628. The gas inlet port 604 and each of the filter cartridge active inlet ports 625 open into the inlet manifold 627. In this way, a single pipe can be used to communicate dirty gas from the print chamber of the manufacturing apparatus to the filtration system, yet a plurality of filter cartridges can be used at the same time to clean the dirty gas. Similarly, the gas outlet port 605 and each of the filter cartridge active outlet ports 626 open into the outlet manifold 628 such that a single pipe can be used to communicate the cleaned gas back to the print chamber. Therefore, when a filter cartridge is in one of the first to fourth filtering positions 616-619, it is in fluid communication with the gas inlet port 604 and the gas outlet port 605.
- a passivation position 620, at which the filter cartridge can be passivated. As discussed above, the process of passivation involves making the filter cartridge safe for being removed from the filter cartridge support. As will be discussed below, passivation can be performed in a number of different ways, some of which may not require gas flow channels through the hub 609.
- a cartridge-unloading position 621, at which the filter cartridge is removable from the filter cartridge support. Since the cartridge-unloading position 621 is after the passivation position 620, the filter cartridge can be safely removed with a reduced risk of adverse effects such as a thermal event.
   In this example, one gas flow channel 624 through the hub 609 is shown at the cartridge-unloading position 621. This gas flow channel 624 can be used to provide a pressure differential between the filter cartridge and the hub 609 / filter cartridge support such that a force is provided to the filter cartridge to blow it away from the underside of the filter cartridge support. This is one example of a cartridge removal mechanism for either: applying a bias force to a filter cartridge when it is in the cartridge-unloading position 621 in order to bias the filter cartridge away from the filter cartridge support / hub 609; or for removing a biasing force that is applied by a cartridge locating mechanism. Other mechanisms may involve use of more than one gas flow channel 624 or no gas flow channels at all.
   In some examples, a separate cartridge-unloading position 621 may not be required because it can be possible to unload a filter cartridge from the filtration system at a different position, such as the passivation position 620 that is described above.

These positions are equiangularly circumferentially spaced around the hub 609. In this example they are spaced around the entire perimeter of the hub 609, although in other examples they may be spaced around only a portion of perimeter of the hub 609 such that there are effectively one or more empty slots around the perimeter of the hub. At these empty slots there is no interaction between the hub 609 and any filter cartridge that is attached to the filter cartridge support in a corresponding location.

The filtration system in this example includes an actuator, which moves the filter cartridge support relative to the hub such that a filter cartridge located in each filter cartridge location cycles between the above positions in the order in which they are listed. However, in some examples not all of the positions are required. Therefore, a filter cartridge support and an associated hub 609 can be provided that have some, but not all of, the positions that are identified above.

In one example, the hub 609 may have the following positions (but not necessarily any of the other positions): the first filtering position 616, the second filtering position 617, and the passivation position 620. In such an example, a pre-purged filter cartridge may be provided to the first filtering position such that it is ready to be used straight away. The inclusion of the two (or more) filtering positions can be beneficial because it enables the simultaneous use of a plurality of filter cartridges thereby allowing a reasonably high gas flow rate to be achieved through the filter cartridges without resulting in an undesirable large pressure drop across the individual filter cartridges. Also, the transition of the filter cartridges between the different filtering positions enables continuous filtration to be achieved without having to take any filter cartridges offline for a significant period of time. A yet further advantage is that a used filter cartridge can be passivated while it is attached to the filter cartridge support 310, and therefore before it is removed from the filtration system. In this way, any safety risks that arise from a person needing to handle an un-passivated filter cartridge can be mitigated. The use of multiple filter cartridges can be advantageous because they enable appropriate sizing of the filters to ensure low pressure drop across the filter without having an individual filter that holds excessive reactive condensate, or is too large for practicable disposal. Providing a system that can support multiple online filters at the same time enables the extremely good flexibility in terms of the ability of the filtration system to support a variety of processes.

In another example, the hub 609 may have the following positions (but not necessarily any of the other positions): the cartridge purge position 615, at least one of the filtering positions 616, and the passivation position 620. In such an example, the hub 609 may not include an inlet manifold 627 and an outlet manifold 628. This is because it may not be necessary to connect a single gas inlet / outlet port to a plurality of filter cartridge inlet / outlet ports. Therefore, in such an example, the hub may simply include a gas inlet channel through its thickness for receiving dirty gas from the print chamber and a gas outlet channel through its thickness for providing clean gas back to the print chamber. An advantage of such a system is that a filter cartridge can be loaded into the filtration system without requiring any pre-treatment (such as purging air out of the filter cartridge) and then can be removed from the filtration system in a state in which it is ready to be disposed off. Therefore, there can be minimal human interaction required to keep the filtration system active for an extended period of time.

In some examples, the filtration system can include a cartridge loading mechanism that automatically loads filter cartridges into the filter cartridge support. The filtration system can also include a cartridge unloading mechanism that automatically unloads filter cartridges from the filter cartridge support. In this way, the filtration system can run autonomously for an extended period of time, during which it automatically replaces its filter cartridges.

In one or more of the examples disclosed herein, the filtration system may include a sensor that senses the performance of the filtration system. For instance such a sensor may sense the effectiveness with which the filtration system is able to filter dirty gas that is receives. One example of a suitable sensor is a weight sensor that senses the weight of one or more of the filter cartridges. As the weight of a filter cartridge increases, it can be expected that its ability to clean incoming gas is reduced because the filter cartridge is becoming full with particles that it has already filtered out of the gas stream. As another example, a flow sensor can be used to determine a flow rate of gas through the filtration system. If the flow rate drops, then this can be attributed to one or more of the filter cartridges becoming clogged up such that it will be less able to continue to adequately filter incoming gas.

Irrespective of what type of sensor is used, the filtration system can include a controller that processes sensed signalling that is received from one or more of the above sensors. The controller can determine an effectiveness of the filtration system based on the sensed signalling, and if it drops below a threshold value then the controller can cause the actuator to advance the position of the filter cartridge support 310 such that each filter cartridge that is located in a filter cartridge location is advanced to the next position. In this way, a new filter cartridge will be brought online and the ability of the filtration system to filter the incoming gas should improve.

Advantageously, such a system can automatically adapt to any changes in the manufacturing process while maintaining an acceptable level of filtration. For example, if an increased number of lasers are used in the build chamber of the AM apparatus then the controller can automatically increase the frequency with which the filter cartridges change position in the filtration system.

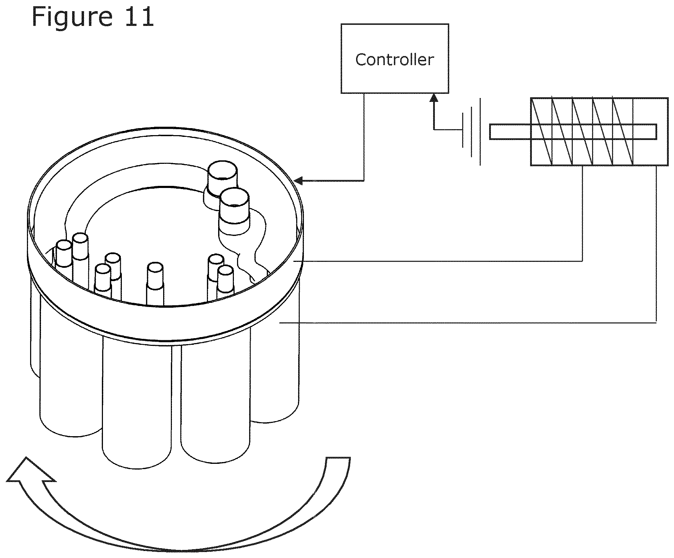

An example of how a filtration system can be automatically controlled will be described below with reference to Figure 11.

In one example, the actuator that moves the filter cartridge support relative to the hub periodically advances the position of a filter cartridge located in each filter cartridge location. The actuator may advance the position of a filter cartridge located in each filter cartridge location in a stepwise fashion, such that it moves the filter cartridge support relative to the hub in discrete steps. In this way, the filter cartridges do not spend a significant time between individually indexed positions that correspond to the positions with reference to the hub that are identified above. Such an actuator can be implemented as a stepper motor or a belt drive that interacts with the outer circumference of the rotating element, thus giving advantageous gearing, for example.

Returning now to the passivation of a filter cartridge that can be performed at the passivation position 620 of Figures 6a and 6b. In the example of Figure 6a, the hub 309 includes at least one passivation inlet channel 630 (in this example two passivation inlet channels 630) for communicating a passivation substance into a filter cartridge that is in the passivation position 620. The passivation substance can be any suitable gas, liquid, or material that renders the filter cartridge non-reactive. For instance, the passivation substance can be a cement, water, a resin, air, oxygen or any oxidising agent , etc.. When a filter cartridge is at the passivation position 620, an inlet port and / or an outlet port of the filter cartridge is in fluid connection with the passivation inlet channel 630 of the hub 609.

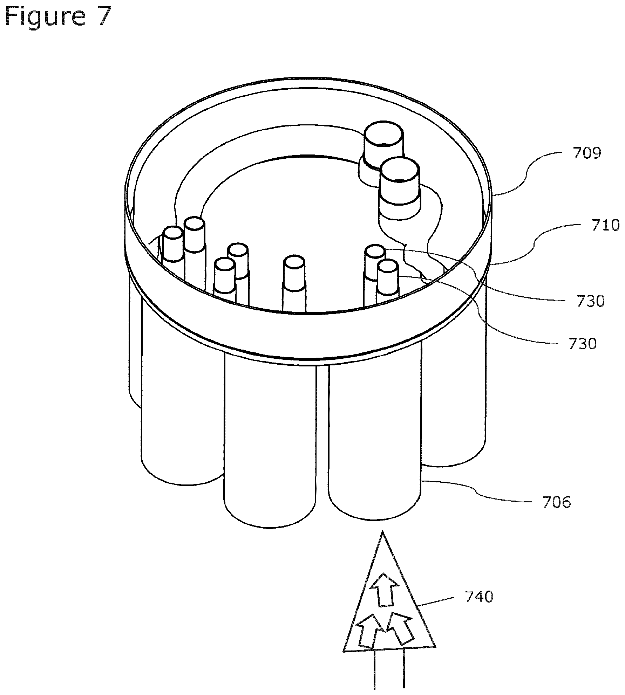

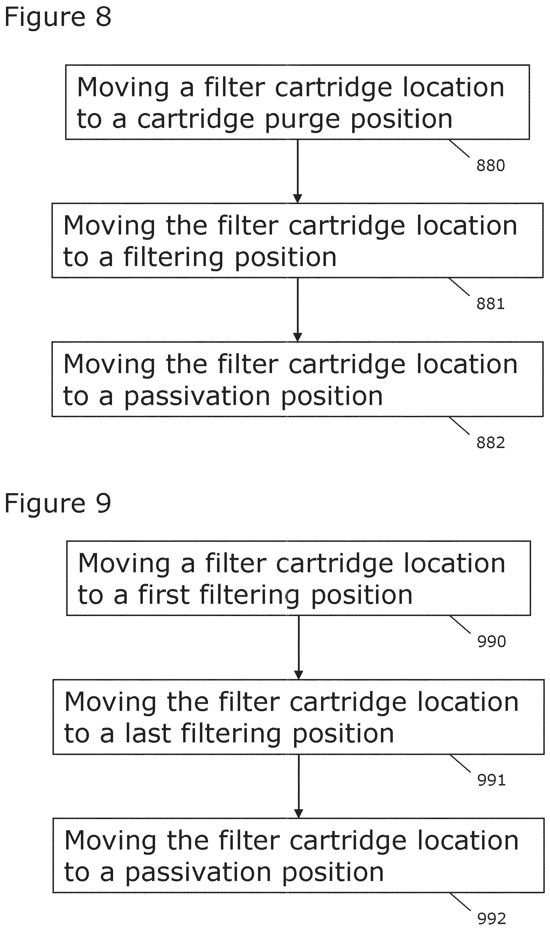

Figure 7 shows another example of how a filter cartridge 706 can be passivated when it is in the passivation position. Although two passivation inlet channels 730 are shown in the hub 709 of Figure 9, it will be appreciated from the discussion that follows that these passivation inlet channels 730 are not required and therefore can be omitted such that there are not any channels through the hub 709 in the vicinity of the passivation position.

In Figure 7, the filtration system includes a spike 740 for piercing the filter cartridge 706 when it is in the passivation position. The spike 740 has a conduit running through it such that it can communicate a passivation substance into the filter cartridge 706 without it passing through the inlet and outlet ports of the filter cartridge. This can be advantageous is some applications because it avoids the risk of any passivation substance getting caught in a passivation inlet channel 730 in the hub 709 or a channel through the filter cartridge support 710. If the passivation substance gets caught in a channel through the filter cartridge support in particular, it may impede the flow of gas through the channel when the filter cartridge support is in a different orientation with respect to the hub 709 such that it is in a different operational position. Therefore, keeping the passivation substance away from the inlet and outlet ports of the filter cartridge 706 can improve the ongoing performance of the filtration system.

Returning to Figures 6a and 6b, we will now describe an advantageous arrangement of the inlet manifold 627 and the outlet manifold 628. The inlet manifold 627 and the outlet manifold 628 are arranged such that the rate of gas flow through the filter cartridge in the last filtering position is greater than the rate of gas flow through the filter cartridge in the first filtering position. Furthermore, the inlet manifold 627 and the outlet manifold 628 can be arranged such that the rate of flow through the filter cartridges at the intermediate filtering positions increases with the index of the filtering position.

This arrangement of the inlet manifold 627 and the outlet manifold 628 has been found to be beneficial because a filter cartridge gets increasingly filled up with residue as it remains online. A filter cartridge that is in the last filtering position 619 will have been online for longer than the filter cartridge in each of the preceding filtering positions 616-618. Therefore, if there was no modulation of the flow through the filter cartridges, the gas would tend to pass through the filter cartridges that have just come online instead of the filter cartridges that have come online earlier. This could lead to sub-optimal filtration because maximum usage of each of the filter cartridges would not be achieved.

In the example of Figure 6a (although it is difficult to see in the drawing), the inlet manifold 627 and the outlet manifold 628 are tapered such that they have a cross-sectional area in the vicinity of the first filtering location 616 that is greater than the cross-sectional area in the vicinity of the last filtering location 619. Tapering the cross-sectional area of the manifolds 627, 628 in this way can ensure that each of the filter cartridges provide a more even contribution to the overall filtration that is provided by the filtration system.

Additionally or alternatively, the gas inlet port 604 can open into the inlet manifold 627 at a position that is closer to the last filter cartridge active inlet port (at the last filtering location 619) than the first filter cartridge active inlet port (at the first filtering location 616). Similarly, the gas outlet port 605 opens into the outlet manifold 628 at a position that is closer to the last filter cartridge active outlet port (at the last filtering location 619) than the first filter cartridge active outlet port (at the first filtering location 616).

Although filtration systems of the present disclosure have been described with reference to an additive manufacturing apparatus, it will be appreciated that the filtration system can be used in any other suitable application and that it is not inextricably tied to use with additive manufacturing apparatuses. One such application is battery manufacture.

Figure 8 shows a process flow that illustrates a method of operating a filtration system. For this process flow, the filtration system comprises a hub and a filter cartridge support. The hub includes: a gas inlet port for receiving dirty gas; a gas outlet port for providing clean gas; and an inert gas channel for communicating an inert gas, such as argon. The filter cartridge support is for accommodating at least three filter cartridges at respective filter cartridge locations.

The method involves moving the filter cartridge support relative to the hub such that a filter cartridge located in a filter cartridge location cycles between the following positions:
- at step 880, a cartridge purge position at which an inlet port of the filter cartridge is in fluid connection with the inert gas channel of the hub.
- at step 881, a filtering position, at which: the inlet port of the filter cartridge is in fluid connection with the gas inlet port of the hub; and an outlet port of the filter cartridge is in fluid connection with the gas outlet port of the hub.
- At step 882, a passivation position at which the filter cartridge can be passivated and subsequently removed from the filter cartridge support.

Figure 9 shows a process flow that illustrates another method of operating a filtration system. For this process flow, the filtration system comprises a hub and a filter cartridge support. The hub comprises: a gas inlet port for receiving dirty gas; a gas outlet port for providing clean gas; at least one filter cartridge active inlet port and at least one filter cartridge active outlet ports wherein each of the filter cartridge active inlet and outlet ports are for communicating a gas to and from a filter cartridge; an inlet manifold; and an outlet manifold. The gas inlet port and each of the filter cartridge active inlet ports open into the inlet manifold. The gas outlet port and each of the filter cartridge active outlet ports open into the outlet manifold. The filter cartridge support is for to accommodating at least three filter cartridges at respective filter cartridge locations.

The method involves moving the filter cartridge support relative to the hub such that a filter cartridge located in a filter cartridge location cycles between the following positions:
- at step 990, a first filtering position at which the filter cartridge is fluidly connected to: at least one of the at least one filter cartridge active inlet ports of the hub; and at least one of the at least one filter cartridge active outlet ports of the hub.
- at step 991, a last filtering position at which the filter cartridge is fluidly connected to: at least one of the at least one filter cartridge active inlet ports of the hub; and at least one of the at least one filter cartridge active outlet ports of the hub.
- at step 992, a passivation position at which the filter cartridge can be passivated and subsequently removed from the filter cartridge support.

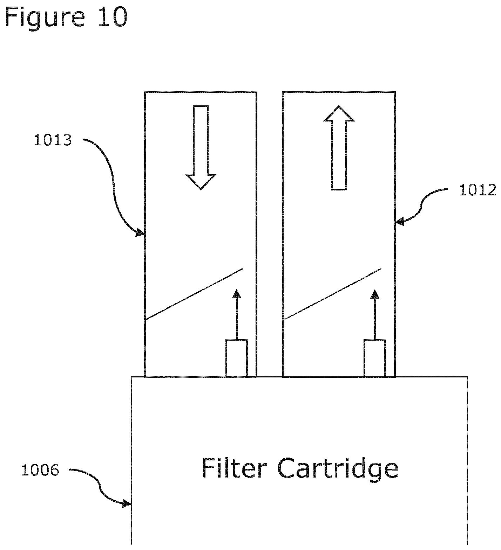

Figure 10 schematically illustrates another example of a filter cartridge that can be used with the filtration systems that are described herein.

As discussed above, the smoke / condensate that is produced during the laser sintering of aluminium, titanium and other reactive materials will oxidise rapidly when introduced to oxygen, thereby risking a thermal event. It is therefore beneficial for the filtrations system to provide protection by avoiding the escape of said condensate. A particular concern can arise if an automatic filter cartridge loading mechanism fails, such that there is a filter cartridge missing from the filtration system. In which case, the condensate could flow to atmosphere through a filter gas flow inlet channel 1013 associated with a filter cartridge location of the interface to which no filter cartridge is attached.

In Figure 10, a check valve is provided that prevents gas flow through the filter gas flow inlet channel 1013 if a filter cartridge is not attached to it. Similarly, in this example, a check valve is also provided that prevents gas flow through the filter gas flow outlet channel 1012 if a filter cartridge is not attached to it. In this way, a check valve is provided associated with each filter gas flow channel associated with each filter cartridge location in the interface, in order to stop the flow to each of the individual ports.

In the example of Figure 10, the check valve associated with the filter gas flow outlet channel 1012 is normally closed by spring pressure. The check valve associated with the filter gas flow inlet channel 1012 is normally closed by system pressure in the hub of the filtration system acting above it.

The filter cartridge 1006 has an actuating pin for each filter gas flow channel 1012, 1013 that mechanically pushes the check valve open when the filter cartridge is attached to the interface. If the filter cartridge is missing the actuating pin, the check valve will not be pushed open and the condensate will not be able to flow through the interface towards the filter cartridge.

Figure 11 shows another example embodiment of a filtration system.

It can be advantageous for the filter online time to be flexible. For example, different processes produce differing levels of condensate creation. Also, for AM processes the powder layer depth, laser quantity and power all have a bearing on filter loading. It can be beneficial for the loading in the filter cartridge to be predictable prior to passivating. This is because different condensate loading will demand different levels of passivation media. Removing a filter cartridge from service too soon will wasteful. Leaving a filter cartridge online for too long can be dangerous.

The filtration system of Figure 11 can advantageously provide a flexible filtration process.

In Figure 11, a sensor measures a pressure differential across the last filter cartridge in the multi-filter online phase. This is implemented in Figure 11 by means of two pressure lines: one that is connected to the filtration system before the gas flows through the last filter cartridge; and one that is connected to the filtration system after the gas flows through the last filter cartridge. These two pressure lines can feed a mechanical plunger such that the pressure differential between the two pressure lines controls the position of the mechanical plunger. When the pressure differential exceeds a threshold level that is defined by a plunger spring, the plunger is pushed to earth. This movement can be sensed in any known way such as by a light beam (an opto-switch, an earth path (a resistive sensor) or any other way. A controller associated with the filtration system can receive an signal from the sensor that indicates that the electrical circuit has been completed because the plunger has moved, and in response it causes the actuator to move the interface to its next position. The filter cartridge that was in the last filtering position therefore moves to the passivation position. In this way, the filter cartridge can be removed from an online filtering position with an optimum fill point and with a quantity of condensate that is known to be safe to be passivated in the passivation position.

## Claims

1. A filtration system (301) comprising:
a hub (309) comprising:
a gas inlet port (304) for receiving dirty gas;
a gas outlet port (305) for providing clean gas;
an inert gas channel (622) for communicating an inert gas;
a filter cartridge support (310) to accommodate at least three filter cartridges (306a-e) at respective filter cartridge locations (511);
an actuator configured to move the filter cartridge support (310) relative to the hub (309) such that a filter cartridge (306a-e) located in each filter cartridge location (511) cycles between the following positions:
a cartridge purge position (615), at which an inlet port of the filter cartridge (306a-e) is in fluid connection with the inert gas channel (622) of the hub (309);
a filtering position, at which:
the inlet port of the filter cartridge (306a-e) is in fluid connection with the gas inlet port (304) of the hub (309); and
an outlet port of the filter cartridge (306a-e) is in fluid connection with the gas outlet port (305) of the hub (309); and
a passivation position (620), at which the filter cartridge (306a-e) can be passivated and subsequently removed from the filter cartridge support (310).

2. The filtration system (301) of claim 1, wherein:
the hub (309) further comprises:
at least one filter cartridge active inlet port (625) and at least one filter cartridge active outlet port (626), wherein each of the filter cartridge active inlet and active outlet ports is for communicating gas to and from a filter cartridge (306a-e);
an inlet manifold (627), wherein the gas inlet port (304) and each of the filter cartridge active inlet ports (625) open into the inlet manifold; and
an outlet manifold (628), wherein the gas outlet port (305) and each of the filter cartridge active outlet ports (626) open into the outlet manifold;
the actuator is configured to move the filter cartridge support (310) relative to the hub (309) such that a filter cartridge (306a-e) located in each filter cartridge location (511) cycles between:
the cartridge purge position (615);
a first filtering position (616), at which the filter cartridge (306a-e) is fluidly connected to: at least one of the at least one filter cartridge active inlet ports (625) of the hub (309); and at least one of the at least one filter cartridge active outlet ports (626) of the hub;
a last filtering position (619), at which the filter cartridge (306a-e) is fluidly connected to: at least one of the at least one filter cartridge active inlet ports (625) of the hub (309); and at least one of the at least one filter cartridge active outlet ports (626) of the hub; and
a passivation position (620).

3. The filtration system (301) of claim 2, wherein:
the hub (309) comprises a single filter cartridge active inlet port (625) and a single filter cartridge outlet port (626), wherein the single filter cartridge active inlet port extends continuously between the first filtering position (616) and the last filtering position (619), and wherein the single filter cartridge active outlet port extends continuously between the first filtering position and the last filtering position.

4. The filtration system (301) of claim 2 or claim 3, wherein the inlet manifold (627) and the outlet manifold (628) are configured such that the rate of gas flow through the filter cartridge (306a-e) when it is in the last filtering position (619) is greater than the rate of gas flow through the filter cartridge when it is in the first filtering position (616).

5. The filtration system (301) of claim 4, wherein the inlet manifold (627) and the outlet manifold (628) are tapered such that they have a cross-sectional area in the vicinity of the first filtering position (616) that is greater than the cross-sectional area in the vicinity of the last filtering position (619).

6. The filtration system (301) of claim 4 or claim 5, wherein:
the gas inlet port (304) opens into the inlet manifold (627) at a position that is closer to the last filtering position (619) than the first filtering position (616); and
the gas outlet port (305) opens into the outlet manifold (628) at a position that is closer to the last filtering position (619) than the first filtering position (616).

7. The filtration system (301) of any preceding claim, wherein:
the hub (309) further comprises a passivation inlet channel (730) for communicating a passivation substance; and
the actuator is configured to move the filter cartridge support (310) relative to the hub (309) such that when a filter cartridge (306a-e) is at the passivation position (620), an inlet port and / or an outlet port of the filter cartridge is in fluid connection with the passivation inlet channel (730) of the hub (309).

8. The filtration system (301) of any preceding claim, wherein:
the hub (309) further comprises a purge channel (629) for communicating gas purged from a filter cartridge (306a-e);
when a filter cartridge (306a-e) is located at the purge position (615), an outlet port of the filter cartridge is in fluid connection with the purge channel (629).

9. The filtration system (301) of any preceding claim, further comprising a cartridge locating mechanism for applying a bias force to the filter cartridge (306a-e) in order to bias the filter cartridge towards the filter cartridge support (310) / hub (309).

10. The filtration system (301) of any preceding claim, wherein the filtration system comprises:
a cartridge loading mechanism that automatically loads filter cartridges (306a-e) into the filter cartridge support (310); and / or
a cartridge unloading mechanism that automatically unloads filter cartridges (306a-e) from the filter cartridge support (310).

11. The filtration system (301) of any preceding claim, wherein the actuator is configured to move the filter cartridge support (310) relative to the hub (309) in order to advance the position of a filter cartridge (306a-e) located in each filter cartridge location (511) periodically, and optionally in a stepwise fashion, such that it moves the filter cartridge support relative to the hub in discrete steps.

12. The filtration system (301) of any preceding claim, further comprising:
a sensor that is configured to sense the performance of the filtration system (301) in order to provide sensed signalling; and
a controller that is configured process the sensed signalling in order to determine an effectiveness of the filtration system (301), and if it drops below a threshold value, then cause the actuator to advance the position of the filter cartridge support (310) such that each filter cartridge (306a-e) that is located in a filter cartridge location (511) is advanced to the next position.

13. The filtration system (301) of any preceding claim, further comprising a spike (740) for piercing the filter cartridge (306a-e) when it is in the passivation position (620), wherein the spike has a conduit running through it such that it can communicate a passivation substance into the filter cartridge without it passing through the inlet and outlet ports of the filter cartridge.

14. A method of operating a filtration system (301), the filtration system comprising:
a hub (309) comprising:
a gas inlet port (304) for receiving dirty gas;
a gas outlet port (305) for providing clean gas;
an inert gas channel (622) for communicating an inert gas; and
a filter cartridge support (310) to accommodate at least three filter cartridges (306a-e) at respective filter cartridge locations (511);
the method comprising:
moving the filter cartridge support (310) relative to the hub such that a filter cartridge (306a-e) located in each filter cartridge location (511) cycles between the following positions:
a cartridge purge position (615), at which an inlet port of the filter cartridge (306a-e) is in fluid connection with the inert gas channel (622) of the hub (309);
a filtering position, at which:
the inlet port of the filter cartridge (306a-e) is in fluid connection with the gas inlet port (304) of the hub (309); and
an outlet port of the filter cartridge (306a-e) is in fluid connection with the gas outlet port (305) of the hub (309); and
a passivation position (620), at which the filter cartridge (306a-e) can be passivated and subsequently removed from the filter cartridge support (310).

## Patentansprüche

1. Filtersystem (301), umfassend:
eine Nabe (309), umfassend:
einen Gaseinlassanschluss (304) zum Aufnehmen von verschmutztem Gas;
einen Gasauslassanschluss (305) zum Bereitstellen von sauberem Gas;
einen Inertgaskanal (622) zum Zuführen eines Inertgases;
eine Filterpatronenhalterung (310) zur Aufnahme von mindestens drei Filterpatronen (306a-e) an entsprechenden Filterpatronenpositionen (511);
einen Aktuator, der so konfiguriert ist, dass er die Filterpatronenhalterung (310) relativ zur Nabe (309) bewegt, sodass eine Filterpatrone (306a-e), die sich an jeder Filterpatronenposition (511) befindet, zwischen den folgenden Positionen wechselt:
eine Patronenreinigungsposition (615), in der ein Einlassanschluss der Filterpatrone (306a-e) in Fluidverbindung mit dem Inertgaskanal (622) der Nabe (309) steht;
eine Filterposition, bei der:
der Einlassanschluss der Filterpatrone (306a-e) in Fluidverbindung mit dem Gaseinlassanschluss (304) der Nabe (309) steht; und
ein Auslassanschluss der Filterpatrone (306a-e) in Fluidverbindung mit dem Gasauslassanschluss (305) der Nabe (309) steht; und
eine Passivierungsposition (620), bei der die Filterpatrone (306a-e) passiviert und anschließend aus der Filterpatronenhalterung (310) entfernt werden kann.

2. Filtersystem (301) nach Anspruch 1, wobei:
das Nabe (309) ferner Folgendes umfasst:
mindestens einen aktiven Einlassanschluss (625) für die Filterpatrone und mindestens einen aktiven Auslassanschluss (626) für die Filterpatrone, wobei jeder der aktiven Einlass- und Auslassanschlüsse der Filterpatrone dazu dient, Gas zu und von einer Filterpatrone (306a-e) zu leiten;
einen Einlassverteiler (627), wobei der Gaseinlassanschluss (304) und jeder der aktiven Einlassanschlüsse (625) der Filterpatrone in den Einlassverteiler münden; und
einen Auslassverteiler (628), wobei der Gasauslassanschluss (305) und jeder der aktiven Auslassanschlüsse (626) der Filterpatrone in den Auslassverteiler münden;
den Aktuator, der so konfiguriert ist, dass er die Filterpatronenhalterung (310) relativ zur Nabe (309) so bewegt, dass eine Filterpatrone (306a-e), die sich an jeder Filterpatronenposition (511) befindet, zwischen folgenden Positionen hin- und herbewegt:
der Patronenreinigungsposition (615);
einer ersten Filterposition (616), an der die Filterpatrone (306a-e) fluidisch verbunden ist mit: mindestens einem der mindestens einen aktiven Einlassanschlüsse (625) der Filterpatrone der Nabe (309); und mindestens einem der mindestens einen aktiven Auslassanschlüsse (626) der Filterpatrone der Nabe;
einer letzten Filterposition (619), an der die Filterpatrone (306a-e) fluidisch verbunden ist mit: mindestens einem der mindestens einen aktiven Einlassanschlüsse (625) der Filterpatrone der Nabe (309); und mindestens einem der mindestens einen aktiven Auslassanschlüsse (626) der Filterpatrone der Nabe; und
einer Passivierungsposition (620).

3. Filtersystem (301) nach Anspruch 2, wobei:
die Nabe (309) einen aktiven Einlassanschluss (625) für eine einzelne Filterpatrone und einen Auslassanschluss (626) für eine einzelne Filterpatrone umfasst, wobei sich der aktive Einlassanschluss für eine einzelne Filterpatrone kontinuierlich zwischen der ersten Filterposition (616) und der letzten Filterposition (619) erstreckt und wobei sich der aktive Auslassanschluss für eine einzelne Filterpatrone kontinuierlich zwischen der ersten Filterposition und der letzten Filterposition erstreckt.

4. Filtersystem (301) nach Anspruch 2 oder Anspruch 3, wobei der Einlassverteiler (627) und der Auslassverteiler (628) so konfiguriert sind, dass die Gasdurchflussrate durch die Filterpatrone (306a-e), wenn diese sich in der letzten Filterposition (619) befindet, größer ist als die Gasdurchflussrate durch die Filterpatrone, wenn diese sich in der ersten Filterposition (616) befindet.

5. Filtersystem (301) nach Anspruch 4, wobei der Einlassverteiler (627) und der Auslassverteiler (628) so verjüngt sind, dass sie in der Nähe der ersten Filterposition (616) eine Querschnittsfläche aufweisen, die größer ist als die Querschnittsfläche in der Nähe der letzten Filterposition (619).

6. Filtersystem (301) nach Anspruch 4 oder Anspruch 5, wobei:
die Gaseinlassanschluss (304) in den Einlassverteiler (627) an einer Position mündet, die näher an der letzten Filterposition (619) als an der ersten Filterposition (616) liegt; und
der Gasauslassanschluss (305) in den Auslassverteiler (628) an einer Position mündet, die näher an der letzten Filterposition (619) als an der ersten Filterposition (616) liegt.

7. Filtersystem (301) aus einem der vorstehenden Ansprüche, wobei:
die Nabe (309) ferner einen Passivierungs-Einlasskanal (730) zum Zuführen einer Passivierungssubstanz umfasst; und
der Aktuator so konfiguriert ist, dass er die Filterpatronenhalterung (310) relativ zur Nabe (309) so bewegt, dass, wenn sich eine Filterpatrone (306a-e) in der Passivierungsposition (620) befindet, ein Einlassanschluss und/oder ein Auslassanschluss der Filterpatrone in Fluidverbindung mit dem Passivierungs-Einlasskanal (730) der Nabe (309) steht.

8. Filtersystem (301) aus einem der vorstehenden Ansprüche, wobei:
die Nabe (309) ferner einen Spülkanal (629) zum Leiten von aus einer Filterpatrone (306a-e) gespültem Gas umfasst;
wobei, wenn sich eine Filterpatrone (306a-e) an der Position der Spülung (615) befindet, ein Auslassanschluss der Filterpatrone in Fluidverbindung mit dem Spülkanal (629) steht.

9. Das Filtersystem (301) aus einem der vorstehenden Ansprüche, ferner umfassend einen Patronenpositionierungsmechanismus zum Ausüben einer Vorspannkraft auf die Filterpatrone (306a-e), um die Filterpatrone in Richtung des Filterpatronenhalters (310)/der Nabe (309) vorzuspannen.

10. Filtersystem (301) aus einem der vorstehenden Ansprüche, wobei das Filtersystem Folgendes umfasst:
einen Patronenlademechanismus, der Filterpatronen (306a-e) automatisch in den Filterpatronenhalter (310) lädt; und/oder
einen Patronenentlademechanismus, der Filterpatronen (306a-e) automatisch aus der Filterpatronenhalterung (310) entlädt.

11. Filtersystem (301) nach einem der vorstehenden Ansprüche, wobei der Aktuator so konfiguriert ist, dass er den Filterkpatronenträger (310) relativ zur Nabe (309) bewegt, um die Position einer Filterpatrone (306a-e), die sich an jeder Filterpatronenposition (511) befindet, periodisch und optional schrittweise so voranzutreiben, dass er den Filterpatronenträger relativ zur Nabe in diskreten Schritten bewegt.

12. Filtersystem (301) aus einem der vorstehenden Ansprüche, ferner umfassend:
einen Sensor, der so konfiguriert ist, dass er die Leistung des Filtersystems (301) erfasst, um erfasste Signale bereitzustellen; und
eine Steuerung, die so konfiguriert ist, dass sie die erfassten Signale verarbeitet, um die Wirksamkeit des Filtersystems (301) zu bestimmen, und wenn diese unter einen Schwellenwert fällt, veranlasst sie den Aktuator, die Position der Filterpatronenhalterung (310) so zu verschieben, dass jede Filterpatrone (306a-e), die sich in einer Filterpatronenposition (511) befindet, in die nächste Position vorgeschoben wird.

13. Filtersystem (301) aus einem der vorstehenden Ansprüche, ferner umfassend einen Stachel (740) zum Durchstechen der Filterpatrone (306a-e), wenn diese sich in der Passivierungsposition (620) befindet, wobei der Stachel eine durch ihn verlaufende Leitung aufweist, sodass er eine Passivierungssubstanz in die Filterpatrone einleiten kann, ohne dass diese durch den Einlass- und Auslassanschluss der Filterpatrone strömt.

14. Verfahren zum Vorgang eines Filtersystems (301), das Filtersystem umfassend:
eine Nabe (309), umfassend:
einen Gaseinlassanschluss (304) zum Aufnehmen von verschmutztem Gas;
einen Gasauslassanschluss (305) zum Bereitstellen von sauberem Gas;
einen Inertgaskanal (622) zum Zuführen eines Inertgases; und
eine Filterpatronenhalterung (310) zur Aufnahme von mindestens drei Filterpatronen (306a-e) an entsprechenden Filterpatronenpositionen (511);
das Verfahren, umfassend:
Bewegen der Filterpatronenhalterung (310) relativ zur Nabe, sodass eine Filterpatrone (306a-e), die sich an jeder Filterpatronenpositionen (511) befindet, zwischen den folgenden Positionen wechselt:
eine Patronenreinigungsposition (615), in der ein Einlassanschluss der Filterpatrone (306a-e) in Fluidverbindung mit dem Inertgaskanal (622) der Nabe (309) steht;
eine Filterposition, bei der:
der Einlassanschluss der Filterpatrone (306a-e) in Fluidverbindung mit dem Gaseinlassanschluss (304) der Nabe (309) steht; und
ein Auslassanschluss der Filterpatrone (306a-e) in Fluidverbindung mit dem Gasauslassanschluss (305) der Nabe (309) steht; und
eine Passivierungsposition (620), bei der die Filterpatrone (306a-e) passiviert und anschließend aus der Filterpatronenhalterung (310) entfernt werden kann.

## Revendications

1. Système de filtration (301) comprenant :
un moyeu (309) comprenant :
un orifice d'entrée de gaz (304) destiné à recevoir du gaz sale ;
un orifice de sortie de gaz (305) pour fournir du gaz propre ;
un canal de gaz inerte (622) pour la communication d'un gaz inerte ;
un support de cartouche filtrante (310) pour accueillir au moins trois cartouches filtrantes (306a-e) aux emplacements de cartouche filtrante (511) respectifs ;
un actionneur configuré pour déplacer le support de cartouche filtrante (310) par rapport au moyeu (309) de sorte qu'une cartouche filtrante (306a-e) située dans chaque emplacement de cartouche filtrante (511) alterne entre les positions suivantes :
une position de purge de cartouche (615), à laquelle un orifice d'entrée de la cartouche filtrante (306a-e) est en liaison fluidique avec le canal de gaz inerte (622) du moyeu (309) ;
une position de filtrage, à laquelle :
l'orifice d'entrée de la cartouche filtrante (306a-e) est en liaison fluidique avec l'orifice d'entrée de gaz (304) du moyeu (309) ; et
un orifice de sortie de la cartouche filtrante (306a-e) est en liaison fluidique avec l'orifice de sortie de gaz (305) du moyeu (309) ; et
une position de passivation (620), à laquelle la cartouche filtrante (306a-e) peut être passivée et ensuite retirée du support de cartouche filtrante (310).

2. Système de filtration (301) selon la revendication 1, dans lequel :
le moyeu (309) comprend également :
au moins un orifice d'entrée actif de cartouche filtrante (625) et au moins un orifice de sortie actif de cartouche filtrante (626), dans lequel chacun des orifices d'entrée et de sortie actifs de cartouche filtrante est destiné à communiquer le gaz vers et depuis une cartouche filtrante (306a-e) ;
un collecteur d'entrée (627), dans lequel l'orifice d'entrée de gaz (304) et chacun des orifices d'entrée actifs de cartouche filtrante (625) s'ouvrent dans le collecteur d'entrée ; et
un collecteur de sortie (628), dans lequel l'orifice de sortie de gaz (305) et chacun des orifices de sortie actifs de cartouche filtrante (626) s'ouvrent dans le collecteur de sortie ;
l'actionneur est configuré pour déplacer le support de cartouche filtrante (310) par rapport au moyeu (309) de sorte qu'une cartouche filtrante (306a-e) située dans chaque emplacement de cartouche filtrante (511) alterne entre :
la position de purge de cartouche (615) ;
une première position de filtration (616), à laquelle la cartouche filtrante (306a-e) est en liaison fluidique avec : au moins l'un de l'au moins l'un des orifices d'entrée actifs de cartouche filtrante (625) du moyeu (309) ; et au moins l'un de l'au moins l'un des orifices de sortie actifs de cartouche filtrante (626) du moyeu ;
une dernière position de filtration (619), à laquelle la cartouche filtrante (306a-e) est en liaison fluidique avec : au moins l'un de l'au moins l'un des orifices d'entrée actifs de cartouche filtrante (625) du moyeu (309) ; et au moins l'un de l'au moins l'un des orifices de sortie actifs de cartouche filtrante (626) du moyeu ; et
une position de passivation (620).

3. Système de filtration (301) selon la revendication 2, dans lequel :
le moyeu (309) comprend un seul orifice d'entrée actif de cartouche filtrante (625) et un seul orifice de sortie de cartouche filtrante (626), dans lequel le seul orifice d'entrée actif de cartouche filtrante se prolonge en continu entre la première position de filtration (616) et la dernière position de filtration (619), et dans lequel le seul orifice de sortie actif de cartouche filtrante se prolonge en continu entre la première position de filtration et la dernière position de filtration.

4. Système de filtration (301) selon la revendication 2 ou la revendication 3, dans lequel le collecteur d'entrée (627) et le collecteur de sortie (628) sont configurés de sorte que le débit de gaz à travers la cartouche filtrante (306a-e) lorsqu'elle est dans la dernière position de filtration (619) est supérieur au débit de gaz à travers la cartouche filtrante lorsqu'elle est dans la première position de filtration (616).

5. Système de filtration (301) selon la revendication 4, dans lequel le collecteur d'entrée (627) et le collecteur de sortie (628) sont coniques de sorte qu'ils aient une aire de section transversale à proximité de la première position de filtration (616) supérieure à l'aire de section transversale à proximité de la dernière position de filtration (619).

6. Système de filtration (301) selon la revendication 4 ou la revendication 5, dans lequel :
l'orifice d'entrée de gaz (304) s'ouvre dans le collecteur d'entrée (627) à une position plus proche de la dernière position de filtration (619) que de la première position de filtration (616) ; et
l'orifice de sortie de gaz (305) s'ouvre dans le collecteur de sortie (628) à une position plus proche de la dernière position de filtration (619) que de la première position de filtration (616).

7. Système de filtration (301) selon une quelconque revendication précédente, dans lequel :
le moyeu (309) comprend également un canal d'entrée de passivation (730) destiné à communiquer une substance de passivation ; et
l'actionneur est configuré pour déplacer le support de cartouche filtrante (310) par rapport au moyeu (309) de sorte que lorsqu'une cartouche filtrante (306a-e) est en position de passivation (620), un orifice d'entrée et/ou un orifice de sortie de la cartouche filtrante est en liaison fluidique avec le canal d'entrée de passivation (730) du moyeu (309).

8. Système de filtration (301) selon une quelconque revendication précédente, dans lequel :
le moyeu (309) comprend également un canal de purge (629) destiné à communiquer le gaz purgé à partir d'une cartouche filtrante (306a-e) ;
lorsqu'une cartouche filtrante (306a-e) est située à la position de purge (615), un orifice de sortie de la cartouche filtrante est en liaison fluidique avec le canal de purge (629).

9. Système de filtration (301) selon une quelconque revendication précédente, comprenant également un mécanisme de localisation de cartouche pour appliquer une force de rappel à la cartouche filtrante (306a-e) afin de rapprocher la cartouche filtrante vers le support de cartouche filtrante (310)/vers le moyeu (309).

10. Système de filtration (301) selon une quelconque revendication précédente, dans lequel le système de filtration comprend :
un mécanisme de chargement de cartouche qui charge automatiquement les cartouches filtrantes (306a-e) dans le support de cartouche filtrante (310) ; et/ou
un mécanisme de déchargement de cartouche qui décharge automatiquement les cartouches filtrantes (306a-e) du support de cartouche filtrante (310).

11. Système de filtration (301) selon une quelconque revendication précédente, dans lequel l'actionneur est configuré pour déplacer le support de cartouche filtrante (310) par rapport au moyeu (309) afin d'avancer la position d'une cartouche filtrante (306a-e) située dans chaque emplacement de cartouche filtrante (511) de manière périodique, et éventuellement par étapes, de sorte qu'il déplace le support de cartouche filtrante par rapport au moyeu par étapes discrètes.

12. Système de filtration (301) selon une quelconque revendication précédente, comprenant également :
un capteur configuré pour détecter les performances du système de filtration (301) afin de fournir une signalisation détectée ; et
un dispositif de commande configuré pour traiter la signalisation détectée afin de déterminer l'efficacité du système de filtration (301), et si celle-ci tombe en dessous d'une valeur seuil, alors faire avancer l'actionneur dans la position du support de cartouche filtrante (310) de sorte que chaque cartouche filtrante (306a-e) située dans un emplacement de cartouche filtrante (511) soit avancée vers la position suivante.

13. Système de filtration (301) selon une quelconque revendication précédente, comprenant également une pointe (740) destinée à percer la cartouche filtrante (306a-e) lorsqu'elle est en position de passivation (620), dans lequel la pointe comporte un conduit la traversant de manière à pouvoir communiquer une substance de passivation dans la cartouche filtrante sans qu'elle passe par les orifices d'entrée et de sortie de la cartouche filtrante.

14. Procédé de fonctionnement d'un système de filtration (301), le système de filtration comprenant :
un moyeu (309) comprenant :
un orifice d'entrée de gaz (304) destiné à recevoir du gaz sale ;
un orifice de sortie de gaz (305) pour fournir du gaz propre ;
un canal de gaz inerte (622) pour la communication d'un gaz inerte ; et
un support de cartouche filtrante (310) pour accueillir au moins trois cartouches filtrantes (306a-e) aux emplacements de cartouche filtrante (511) respectifs ;
le procédé comprenant :
le déplacement du support de cartouche filtrante (310) par rapport au moyeu de sorte qu'une cartouche filtrante (306a-e) située dans chaque emplacement de cartouche filtrante (511) alterne entre les positions suivantes :
une position de purge de cartouche (615), à laquelle un orifice d'entrée de la cartouche filtrante (306a-e) est en liaison fluidique avec le canal de gaz inerte (622) du moyeu (309) ;
une position de filtrage, à laquelle :
l'orifice d'entrée de la cartouche filtrante (306a-e) est en liaison fluidique avec l'orifice d'entrée de gaz (304) du moyeu (309) ; et
un orifice de sortie de la cartouche filtrante (306a-e) est en liaison fluidique avec l'orifice de sortie de gaz (305) du moyeu (309) ; et
une position de passivation (620), à laquelle la cartouche filtrante (306a-e) peut être passivée et ensuite retirée du support de cartouche filtrante (310).
